Europäisches Patentamt

**European Patent Office**

**Office européen des brevets**

(19)

(11) Numéro de publication : **0 023 189**
**B1**

(12)

# FASCICULE DE BREVET EUROPÉEN

(45) Date de publication du fascicule du brevet :
18.01.84

(51) Int. Cl.³ : **F 16 L 37/22**, F 16 L 37/08,
F 16 L 37/28

(21) Numéro de dépôt : 80420092.1

(22) Date de dépôt : 21.07.80

(54) **Perfectionnements aux dispositifs de raccord rapide pour la jonction des canalisations.**

(30) Priorité : 23.07.79 FR 7919383

(43) Date de publication de la demande :
28.01.81 Bulletin 81/04

(45) Mention de la délivrance du brevet :
18.01.84 Bulletin 84/03

(84) Etats contractants désignés :
CH DE GB IT LI SE

(56) Documents cités :
CH-A-   414 280
FR-A- 1 403 103
FR-A- 1 487 323
GB-A-   473 221
US-A- 2 913 263

(73) Titulaire : **S.A. DES ETABLISSEMENTS STAUBLI**
**(France)**
**B.P. 20**
**F-74210 Faverges (FR)**

(72) Inventeur : **Truchet, Gaston**
**"Les Cyclamens"**
**F-74210 Faverges (FR)**

(74) Mandataire : **Monnier, Guy**
**Cabinet Monnier 142-150 Cours Lafayette**
**F-69003 Lyon (FR)**

Jouve, 18, rue St-Denis, 75001 Paris, France

Perfectionnements aux dispositifs de raccord rapide pour la jonction des canalisations

La présente invention a trait aux raccords rapides destinés à assurer la jonction de deux canalisations et constitués d'un élément mâle et d'un élément femelle propres à s'emmancher de manière étanche l'un à l'intérieur de l'autre et à être immobilisés axialement par un mécanisme de verrouillage, en provoquant le cas échéant l'ouverture automatique d'un clapet chargé de fermeture.

On connaît des raccords du type sus-visé dans lesquels le mécanisme de verrouillage comprend au moins une barrette cylindrique orientée transversalement par rapport à l'axe du corps de l'élément femelle et montée à coulissement à l'intérieur d'encoches obliques pratiquées dans le corps précité, de façon à s'engager élastiquement, sous l'effet d'un ressort de rappel convenablement agencé, dans une dépression annulaire prévue sur l'embout d'emmanchement de l'élément mâle. Un tel agencement a été notamment décrit dans le brevet U.S.A. n° 2 913 263 (ZAJAC).

Dans les raccords de ce type le verrouillage en vue de la dissociation des deux éléments est opéré à l'aide d'un manchon extérieur monté à coulissement axial sur la paroi antérieure externe du corps de l'élément femelle. Ce manchon est agencé de manière à ce que son déplacement axial vers l'arrière libère la barrette en permettant de la sorte le retrait de l'élément mâle sous l'effet d'une simple traction axiale exercée sur ledit élément.

L'expérience démontre que le manchon de déverrouillage à coulissement axial est particulièrement vulnérable sur la périphérie du corps de l'élément femelle. Il est ainsi soumis à des déformations non négligeables qui provoquent de manière relativement fréquente des endommagements plus ou moins graves. En outre son déplacement dans le sens axial risque de déterminer sa manœuvre intempestive, notamment lorsqu'au cours d'un mouvement longitudinal des canalisations sur le sol, ledit manchon vient buter contre une pièce fixe quelconque.

Les perfectionnements qui font l'objet de la présente invention visent à remédier aux inconvénients sus-mentionnés et à permettre la réalisation d'un raccord rapide du genre sus-visé qui soit susceptible de répondre particulièrement bien aux divers desiderata de la pratique, notamment en ce qui concerne la fiabilité du système de déverrouillage.

Le raccord rapide suivant l'invention est du genre connu comprenant un élément mâle pourvu d'un embout creusé d'une dépression annulaire et un élément femelle présentant au moins une encoche oblique située en regard de ladite dépression annulaire, le verrouillage de l'élément mâle dans l'élément femelle étant assuré par au moins une barrette cylindrique mobile à l'intérieur de ladite encoche oblique et sollicitée par des moyens élastiques orientés de manière substantiellement axiale et qui tendent, en enfonçant ladite barrette dans l'encoche précitée, à l'engager dans la dépression annulaire, tandis qu'il est prévu un organe de déverrouillage pour agir sur la barrette afin de libérer l'embout.

Il est caractérisé en ce que :

a) l'élément femelle présente une entaille transversale adjacente à l'encoche oblique et,

b) l'organe de déverrouillage est constitué par un poussoir creux traversé par l'élément mâle et mobile dans ladite entaille, lequel poussoir creux présente au moins une rampe profilée en équerre qui contacte les extrémités de la barrette afin de repousser celle-ci vers l'extérieur quand ledit poussoir est déplacé transversalement par rapport à l'axe du raccord, tandis que lorsque ce poussoir est relâché, la barrette est repoussée dans la dépression annulaire par l'action des moyens élastiques sus-mentionnés qui déplacent simultanément le poussoir vers l'extérieur.

On conçoit qu'un tel poussoir creux est susceptible d'être encastré dans le corps de l'élément femelle, en étant ainsi mis à l'abri de déformations ou sollicitations intempestives, tout en étant apte à être très aisément manœuvré par l'opérateur en vue de la dissociation des deux éléments du dispositif.

Le dessin annexé, donné à titre d'exemple, permettra de mieux comprendre l'invention, les caractéristiques qu'elle présente et les avantages qu'elle est susceptible de procurer :

Figure 1 est une coupe axiale schématique d'un raccord rapide comportant application des perfectionnements suivant l'invention.

Figure 2 en est une coupe transversale suivant II-II (fig. 1).

Figure 3 illustre le fonctionnement du poussoir de déverrouillage.

Figure 4 est une coupe de détail montrant la position de la barrette lors de l'actionnement du poussoir.

Figure 5 représente un raccord rapide suivant l'invention équipé de deux barrettes opposées de verrouillage.

Figure 6 est la coupe transversale suivant VI-VI (fig. 5).

Figures 7 et 8 illustrent une variante de réalisation du mode de mise en œuvre de l'invention suivant fig. 5 et 6.

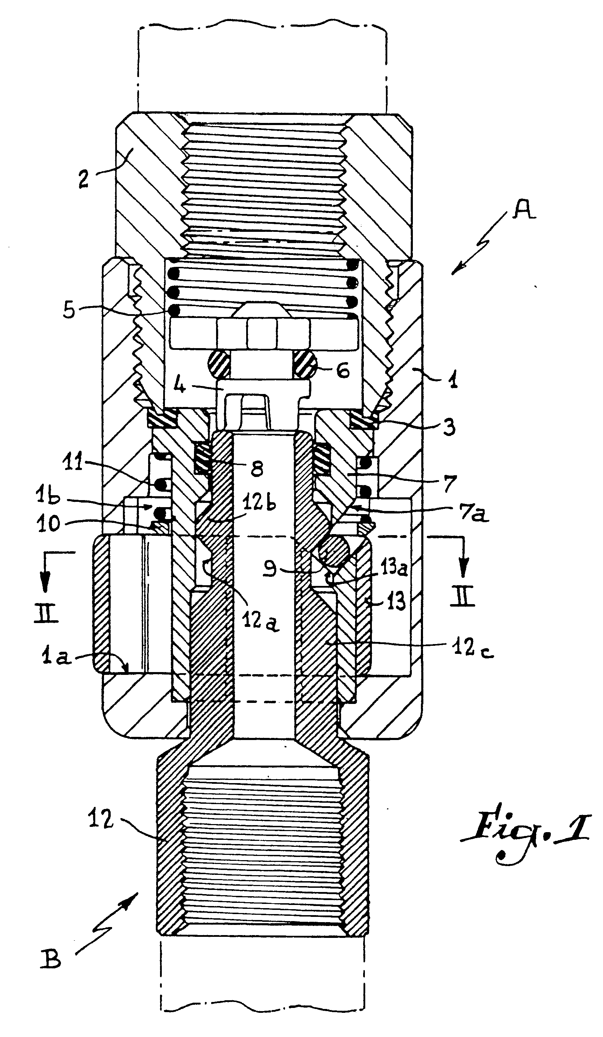

Le corps de l'élément femelle A du raccord rapide représenté en fig. 1 est constitué par l'assemblage de deux pièces tubulaires 1 et 2, vissées avec interposition d'un joint d'étanchéité 3. La pièce 2, destinée à être fixée à l'extrémité de l'une des deux canalisations à raccorder, renferme un clapet guidé 4 qu'un ressort 5 tend à maintenir appliqué par son joint 6 contre un siège annulaire correspondant. Dans la pièce 1 est fixée une douille 7 dont l'ouverture est équipée d'un joint torique 8 ; cette douille est découpée d'une encoche 7a orientée obliquement de l'extérieur vers l'intérieur depuis la partie arrière du corps 1-2, laquelle encoche 7a forme logement pour une barrette cylindrique de verrouillage 9.

Une rondelle 10, sollicitée par un ressort 11, tend à repousser la barrette 9 vers l'avant.

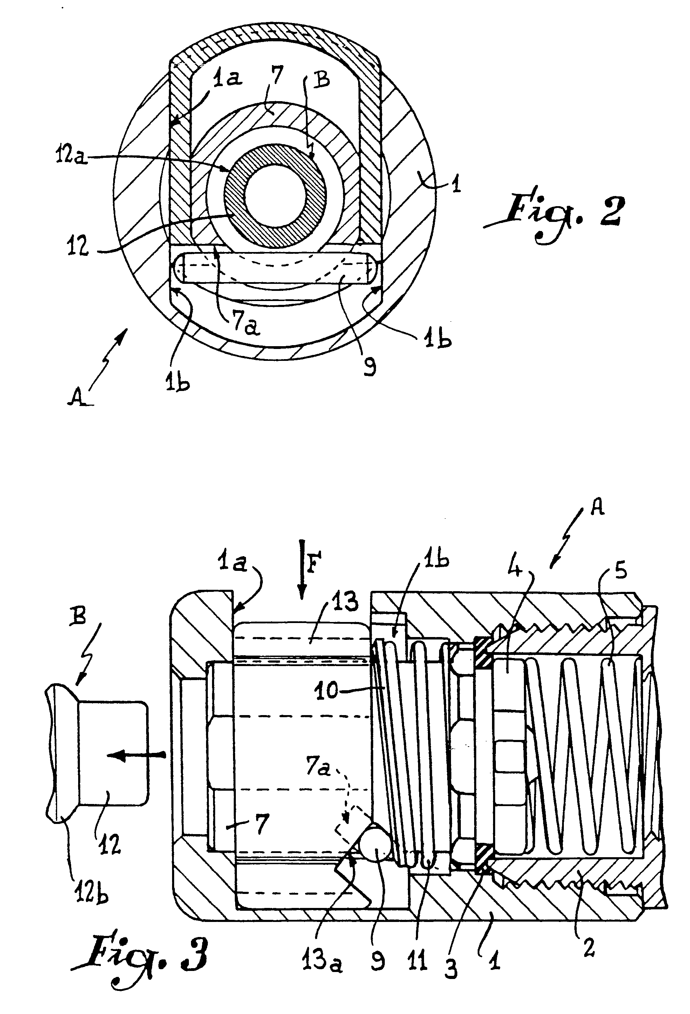

L'ensemble de cette construction est classique et ne nécessite donc pas une description détaillée. Comme plus particulièrement montré en figure 2, la barrette 9 est propre, sous l'effet du ressort 11, à s'engager dans une dépression 12*a* prévue en arrière d'une collerette 12*b* à profil bitronconique ménagée sur l'embout 12*c* du corps 12 de l'élément mâle B. Ce corps 12 est agencé pour être fixé à l'extrémité de la seconde canalisation. Bien entendu l'embout 12*c* est dimensionné pour s'emmancher dans la douille 7 et repousser en position d'ouverture le clapet chargé 4, le joint 8 assurant l'étanchéité du raccordement.

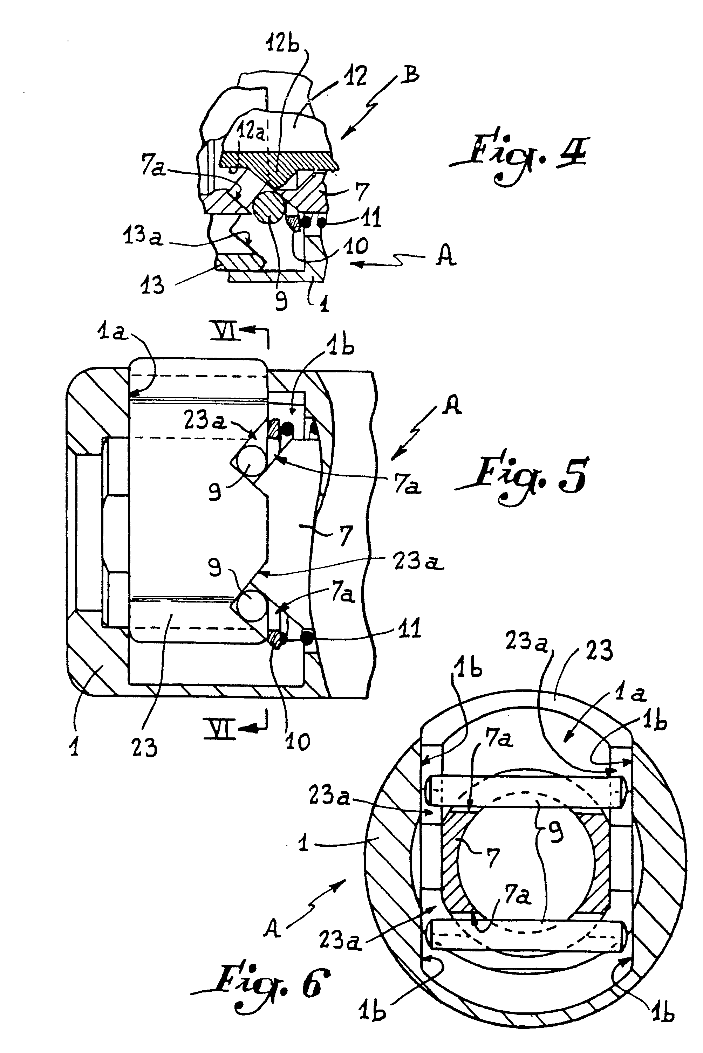

Conformément à la présente invention l'organe de déverrouillage est constitué par un poussoir creux 13 mobile dans une entaille transversale 1*a* de la pièce 1 du corps 1-2. Ce poussoir 13 présente un profil fermé pour chevaucher la douille 7 qui coopère à son guidage ; à sa partie inférieure, son bord tourné vers l'arrière est découpé d'une rampe 13*a* (fig. 3) à profil en équerre, laquelle rampe forme butée pour la barrette 9 qui sous l'effet de son ressort 11 tend à repousser vers l'extérieur ledit poussoir 13. A cette position de repos et comme montré en figure 2 la paroi extérieure du poussoir 13 se trouve disposée pratiquement au niveau de la paroi extérieure de la pièce 1.

Bien entendu ce poussoir 13 ne gêne en aucune manière le fonctionnement du mécanisme de verrouillage, la barrette 9 s'engageant dans la dépression 12*a* du corps de l'élément mâle. On comprend par contre qu'une pression exercée suivant le sens indiqué par la flèche F de figure 3 a pour effet de chasser le poussoir à l'intérieur du corps de l'élément femelle. Comme montré en figure 4 la rampe 13*a* prenant appui contre la barrette 9 déplace alors cette dernière qui vient affecter une position radiale telle qu'elle libère la collerette 12*b*, l'embout 12*c* de l'élément mâle B pouvant de la sorte être dégagé de l'élément femelle A.

Il va de soi que dès que l'utilisateur cesse son action sur le poussoir 13, celui-ci revient à sa position initiale de figure 1 et 2, si bien que le dispositif est prêt pour une nouvelle opération de raccordement. Figure 1 fait bien ressortir que ce poussoir 13 se trouve encastré dans le corps de l'élément femelle A, de telle sorte qu'il est à l'abri de toute sollicitation intempestive ou déformation.

Figure 5 et 6 illustrent un mode de mise en œuvre de l'invention dans lequel le mécanisme de verrouillage comprend deux barrettes cylindriques 9 orientées parallèlement l'une à l'autre. Evidemment la douille centrale 7 présente deux encoches ou logements obliques 7*a* pour recevoir ces deux barrettes qui sont sollicitées par le même ressort 11 associé à la même rondelle 10, tandis que le poussoir, ici référencé 23, est découpé de deux rampes 23*a*. L'une de celles-ci, à savoir celle qui est située du côté opposé à la surface d'actionnement du poussoir, est identique à la rampe 13*a* de figure 1 à 4, tandis que l'autre est formée (fig. 6) par deux parties opposées obtenues par usinage du bord arrière dudit poussoir. Le fonctionnement au verrouillage et au déverrouillage est tout à fait similaire à celui décrit ci-dessus.

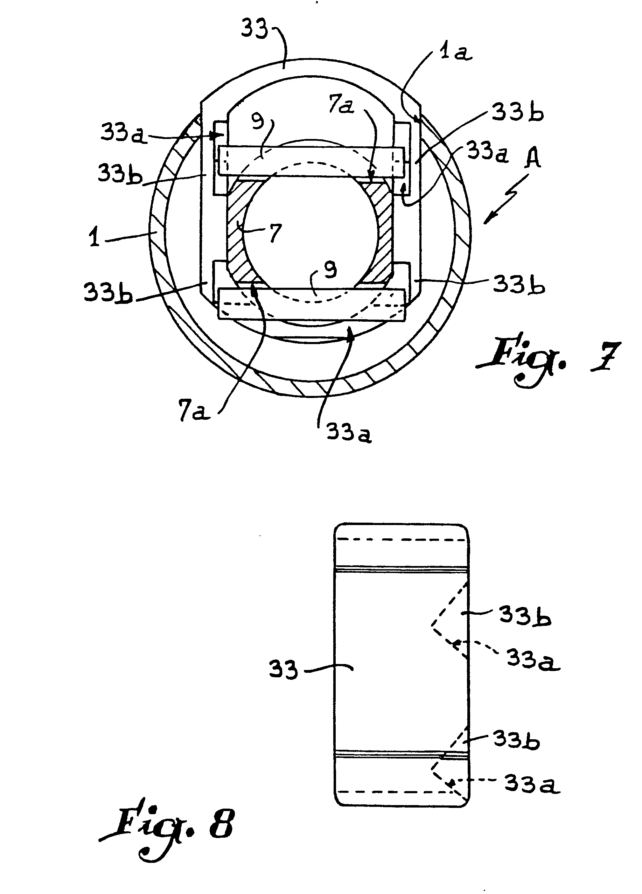

Dans les deux formes de réalisation qui viennent d'être décrites, la retenue de la barrette unique ou de chacune des deux barrettes de verrouillage dans le sens axial était assurée par butée contre des faces planes 1*b* prévues au niveau de la paroi interne de la pièce 1 du corps 1-2. Dans la variante illustrée en figure 7 et 8, correspondant au verrouillage à l'aide de deux barrettes 9, le poussoir référencé 33 comporte, outre les rampes d'actionnement 33*a*, des facettes 33*b* qui ferment latéralement lesdites rampes et qui forment butées limitant le déplacement axial des barrettes précitées.

## Revendication

Raccord rapide pour la jonction de deux canalisations, comprenant un élément mâle (B) pourvu d'un embout (12*c*) creusé d'une dépression annulaire (12*a*) et un élément femelle (A) présentant au moins une encoche oblique (7*a*) située en regard de ladite dépression annulaire (12*a*), le verrouillage de l'élément mâle (B) dans l'élément femelle (A) étant assuré par au moins une barrette cylindrique (9) mobile à l'intérieur de ladite encoche oblique (7*a*) et sollicitée par des moyens élastiques (11) orientés de manière substantiellement axiale et qui tendent, en enfonçant ladite barrette (9) dans l'encoche (7*a*) précitée, à l'engager dans la dépression annulaire (12*a*), tandis qu'il est prévu un organe de déverrouillage pour agir sur la barrette (9) afin de libérer l'embout (12*c*), caractérisé en ce que :

a) l'élément femelle (A) présente une entaille transversale (1*a*) adjacente à l'encoche oblique (7*a*), et,

b) l'organe de déverrouillage est constitué par un poussoir creux (13) traversé par l'élément mâle (B) et mobile dans ladite entaille (1*a*), lequel poussoir creux (13) présente au moins une rampe (13*a*) profilée en équerre et qui contacte les extrémités de la barrette (9) afin de repousser celle-ci vers l'extérieur quand ledit poussoir (13) est déplacé transversalement par rapport à l'axe du raccord, tandis que lorsque ce poussoir (13) est relâché, la barrette (9) est repoussée dans la dépression annulaire (12*a*) par l'action des moyens élastiques (11) sus-mentionnés qui déplacent simultanément le poussoir (13) vers l'extérieur.

## Claim

Quick-acting connector device for the joining of two conduits, comprising a male element (B) provided with a tip (12*c*) which is grooved by an annular depression (12*a*) and a female element (A) providing at least one oblique notch (7*a*)

situated facing the said annular depression (12a), the locking of the male element (B) in the female element (A) being ensured by at least one cylindrical bar (9) which is movable in the interior of the said oblique notch (7a) and acted upon by elastic means (11) oriented in a substantially axial manner and which, by driving the said bar (9) into the above-mentioned notch (7a), conduce to engage it in the annular depression (12a), whilst an unlocking member is provided to act on the bar (9) so as to free the tip (12c), characterized in that :

a) the female element (A) provides a transverse groove (1a) adjacent to the oblique notch (7a), and

b) the unlocking member comprises a hollow pusher (13) traversed by the male element (B) and which is movable in the said groove (1a), the hollow pusher (13) providing at least one gradient (13a) of right-angled section and contacting the extremities of the bar (9) so as to push back the latter towards the exterior when the pusher (13) is displaced transversally in relation to the axis of the connection, and whilst the pusher (13) is relaxed, the bar (9) is pushed back into the annular depression (12a) by the action of the above-mentioned elastic means (11) which simultaneously displaces the pusher (13) towards the exterior.

## Anspruch

Schnellkupplung für die Verbindung zweier Rohrleitungen, mit einem Steckerteil (B), welches ein mit einer ringförmigen Vertiefung (12a) versehenes Mundstück (12c) aufweist, und einem Fassungsteil (A), welches wenigstens einen der ringförmigen Vertiefung (12a) gegenüber angeordneten Schrägschlitz (7a) hat, bei welcher die Verriegelung des Steckerteils (B) im Fassungsteil (A) durch wenigstens einen beweglich in dem Schrägschlitz (7a) geführten, zylindrischen Bolzen (9) bewerkstelligbar ist, welcher durch im wesentlichen axial ausgerichtete elastische Einrichtungen (11) in den Schrägschlitz (7a) hinein und dadurch in Eingriff mit der ringförmigen Vertiefung (12a) belastet ist, sowie ferner mit einem Entriegelungsteil, welches am Bolzen (9) angreift, um diesen von dem Mundstück (12c) zu lösen, dadurch gekennzeichnet,

a) daß das Fassungsteil (A) zunächst dem Schrägschlitz (7a) einen quer verlaufenden Ausschnitt (1a) aufweist und

b) daß das Entriegelungsteil als ein beweglich in dem Ausschnitt (1a) geführter und vom Steckerteil (B) durchsetzter, hohler Schieber (13) ausgebildet ist, welcher wenigstens eine an den Enden des Bolzens (9) angreifende Schrägflanke (13a) aufweist, so daß der Bolzen (9) bei einer Querverschiebung des Schiebers (13) in bezug auf die Achse der Kupplung auswärts bewegbar ist, während der Bolzen (9) bei Freigabe des Schiebers (13) durch die vorstehend genannten elastischen Einrichtungen (11) unter gleichzeitiger Auswärtsbewegung des Schiebers (13) in Eingriff mit der ringförmigen Vertiefung (12a) bewegbar ist.

*Fig. 1*

*Fig. 2*

*Fig. 3*

*Fig. 4*

*Fig. 5*

*Fig. 6*

Fig. 7

Fig. 8

4